# EUROPEAN PATENT SPECIFICATION

(11) **EP 0 926 621 B1**
(45) Date of publication and mention of the grant of the patent: **17.10.2001**
(21) Application number: 97122871.3
(22) Date of filing: 24.12.1997
(51) Int. Cl.: G06K 9/00

(54) **Apparatus for certifying handwriting**
Gerät zur Handschriftbeglaubigung
Appareil pour certifier l'écriture manuscrite

(43) Date of publication of application: 30.06.1999
(73) Proprietor: YASHIMA ELECTRIC CO., Ltd., Kyoto-shi, Kyoto 601 (JP)
(72) Inventor: Nakamura, Yuki, Minami-ku, Kyoto 601 (JP); Shimada, Yukihiro, Minami-ku, Kyoto 601 (JP); Hishiki, Ichiro, Minami-ku, Kyoto 601 (JP); Taguchi, Toshio, Minami-ku, Kyoto 601 (JP)
(74) Representative: Prüfer, Lutz H., Dipl.-Phys.

(56) References cited:
- US-A- 5 422 959
- HIDEO TAGUCHI ET AL: "ON-LINE RECOGNITION OF HANDWRITTEN SIGNATURES BY FEATURE EXTRACTIONOF PEN MOVEMENTS" SYSTEMS & COMPUTERS IN JAPAN, vol. 20, no. 10, 1 October 1989, pages 1-13, XP000128830
- PATENT ABSTRACTS OF JAPAN vol. 018, no. 460 (P-1793), 26 August 1994 & JP 06 149468 A (HITACHI LTD), 27 May 1994,
- SATO Y ET AL: "ONLINE SIGNATURE VERIFICATION BASED ON SHAPE, MOTION, AND WRITING PRESSURE" PROCEEDINGS OF THE INTERNATIONAL JOINT CONFERENCE ON PATTERN RECOGNITION, MUNICH, OCTOBER 19- 22 1982, vol. PART 2, no. PROC. 6, 19 October 1982, INSTITUTE OF ELECTRICAL AND ELECTRONICS ENGINEERS, pages 823-826, XP002011950
- MARTENS R ET AL: "On-line signature verification: discrimination emphasised" PROCEEDINGS OF THE FOURTH INTERNATIONAL CONFERENCE ON DOCUMENT ANALYSIS AND RECOGNITION (CAT. NO.97TB100138), PROCEEDINGS OF THE FOURTH INTERNATIONAL CONFERENCE ON DOCUMENT ANALYSIS AND RECOGNITION, ULM, GERMANY, 18-20 AUG. 1997, ISBN 0-8186-7898-4, 1997, LOS ALAMITOS, CA, USA, IEEE COMPUT. SOC, USA, pages 657-660 vol.2, XP002063376

## Description

The present invention relates to an apparatus for certifying handwriting which judges whether or not a handwritten signature or the like is a true signature.

In Japan, a stamp is often employed to recognize an individual in a filing document, contract document or the like. But, in recent years, a signature has become popular, which is employed to recognize an individual similarly to European and American countries due to internationalization of transactions. An expert opinion based upon visual recognition is conventionally employed as a countermeasure to a forged signature. Also, an apparatus for scientifically judging whether or not a handwritten signature is a true signature is used as a countermeasure to a forged signature. Most apparatus among the previously proposed apparatus for judging whether or not a handwritten signature is a true signature detect variation in a single factor, such that an entire image of a signature is applied in a pattern matching operation with a previously stored entire image of a signature written by the person himself, and location information of characteristic points (for example, edge points, cross points and the like) within the handwriting is compared with previously stored location information of characteristic points within the handwriting written by the person. Variation information in writing pressure in a time sequential manner then is compared with previously stored serial variation information in writing pressure in a time sequential manner or the like.

With the apparatus for judging whether or not the handwritten signature is a true signature based upon a single factor, a disadvantage arises in that a signature is difficult to judge accurately when the signature is forged by a person who has trained to some degree with an intention to forge the signature. Therefore, the apparatus may judge a signature to be a true signature even when the signature is a forged signature.

In Hideo Taguchi et al.: "On-Line Recognition of Handwritten Signatures by Feature Extraction of Pen Movements" in Systems and Computers in Japan, Vol. 20, No. 10, October 1, 1989 an apparatus for certifying handwriting is disclosed. The apparatus comprises a pen having a pressure sensor and a set of four optical fiber pairs which is able to detect a position of the pen on a paper, to detect the time response characteristics of writing force and to detect the pen inclination by differences in the reflected light intensities at the respective optical fibers. The pen is connected with a processing circuit for verification.

From US-Patent 5,422,959 a signature verification system is known comprising a stylus which contains two transducers placed so that axial force and lateral force are measured simultaneously. The ratio of these forces are indicative of the angle of the stylus to the writing surface at that moment.

### Summary of the invention

It is an object of the present invention to provide an apparatus for certifying handwriting with high accuracy.

This object is solved by an apparatus for certifying handwriting as is defined in the independent claim 1.

Preferred developments of the invention are given in the dependent claims.

Peculiar ways of writing depend upon each individual, even when a difference between the peculiar ways is not recognized by comparing an entire image pattern of a new signature with an entire image pattern of a registered signature. The apparatus for certifying handwriting securely recognizes a difference so that a certification accuracy is improved even when the difference is, e.g., a difference between a person having a faster writing speed and a person having a slower writing speed, a difference between a person having a slower writing speed at an initial stage of writing and a faster writing speed at a final stage of writing and a person having a different relative writing speed, a difference between a person holding a pen in a standing posture and a person holding a pen in an inclined posture, or the like.

### Brief Description of The Drawings

Figure 1 is a block diagram illustrating a basic arrangement of an apparatus for certifying handwriting according to an embodiment of the present invention;
Figures 2(A) and 2(B) are diagrams useful in understanding a certification process based upon variations of a movement vector;
Figures 3(A) and 3(B) are diagrams useful in understanding a certification process based upon variations of a writing speed;
Figures 4(A) and 4(B) are diagrams useful in understanding a certification process based upon variations of a distribution ratio of black/white dots;
ures 5(A) and 5(B) are graphs illustrating variations of a vector following the passage of time, in correspondence to Figs. 2(A) and 2(B);
Figure 6 is a diagram useful in understanding a certification feature obtaining formula of the apparatus for certifying handwriting;
Figure 7 is a block diagram illustrating a functionally detailed arrangement of the apparatus for certifying handwriting illustrated in Fig. 1;
Figure 8 is a block diagram of an apparatus for storing and reproducing handwriting which is used for sampling handwriting data for the apparatus for certifying handwriting;
Figure 9 is a cross sectional view of a certification pen which includes the apparatus for storing and reproducing handwriting;
Figure 10 is a diagram useful in understanding a handwriting detection method using a CCD of the certification pen; and
Figures 11(A) through 11(F) are diagrams each illustrating an individual sampled image which is stored in the certification pen at every sampling interval.

### Detailed Description of The Preferred Embodiments

Hereinafter, referring to the attached drawings, we explain the embodiments of the present invention in detail.

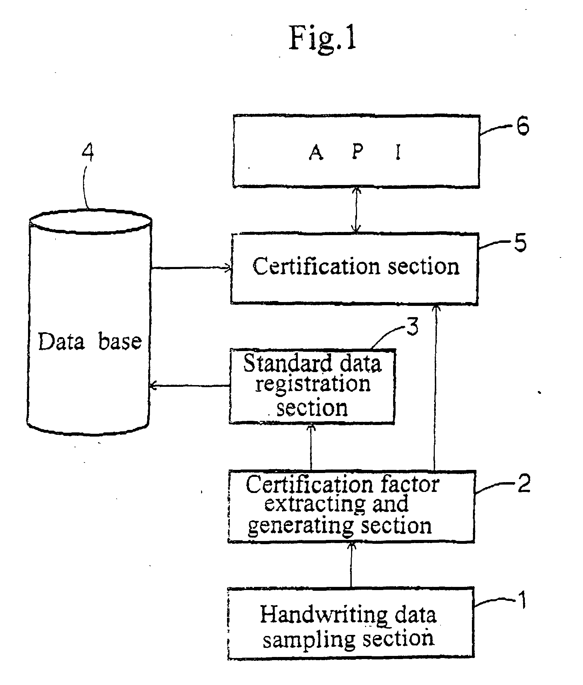

Fig. 1 is a block diagram illustrating a basic arrangement of a system for certifying handwriting (an apparatus for certifying a signature) according to an embodiment of the present invention.

The apparatus comprises a handwriting data sampling section 1 for sampling handwriting data, a certification feature extracting and generating section 2 for extracting and generating five certification features also called vertification factor, based upon the sampled handwriting data, a standard data registration section 3 for registering the extracted and generated five certification factors as standard data for an individual when a registration mode is selected, a data base 4 for storing the registered data, and a certification section 5 for performing certification processing which judges whether or not a signature is a true signature by comparing the extracted and generated five certification factors, the certification factors being extracted. and generated when a certification mode is selected, with the registered data stored in the data base 4. A certification result is output through an API (application program interface) 6.

The five certification factors are a writing vector, a writing speed, an inclination angle for holding a pen, a distribution ratio of black/ white dots and a writing pressure, also called writing stress.

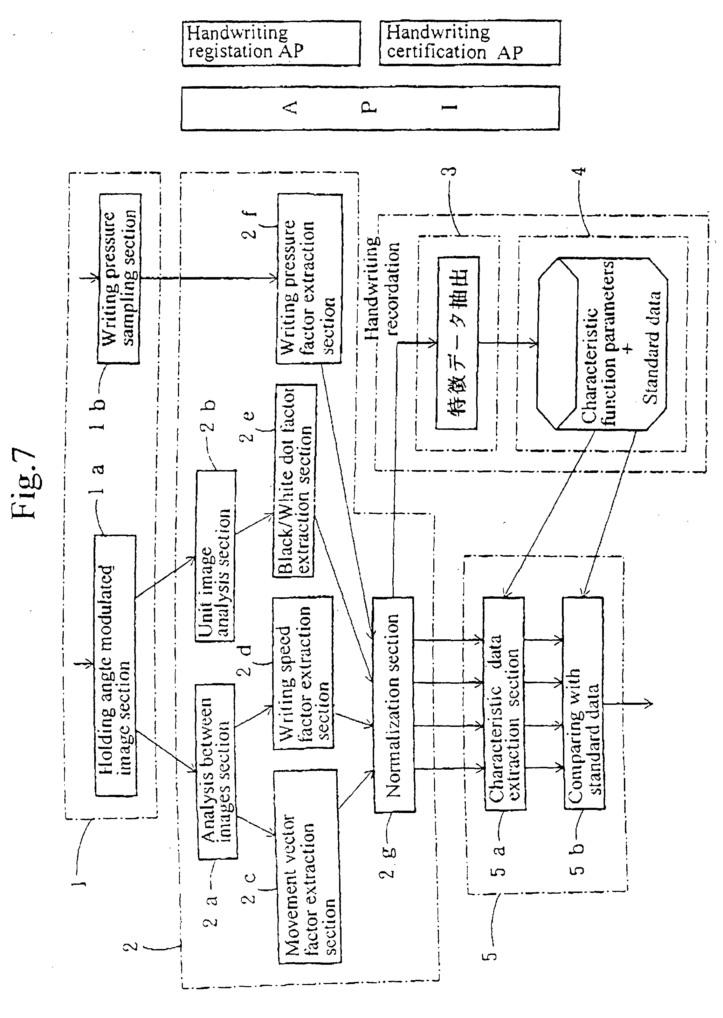

Fig. 7 is a block diagram illustrating the apparatus illustrated in Fig. 1 in detail based upon its function.

An image sampling section 1a for sampling an image (which image is modulated (deformed) based upon a holding angle of a pen) through a CCD (charge coupled device) camera of a certification pen at every predetermined sampling interval. A writing pressure sampling section 1b samples a signal output from a writing pressure sensor at every predetermined sampling interval. An analysis section 2a for performing an analysis between images analyzes image data at the present sampling time and image data at the previous sampling time so that a movement vector factor extraction section 2c and a writing speed factor extraction section 2d can extract a movement vector factor and a writing speed factor, respectively. A unit image analysis section 2b performs a black/white dot factor extraction 2e from the present unit image. Further, an inclination angle for holding a pen is extracted based upon a modulation degree due to a pen holding angle of each unit image which is held by the unit image analysis section 2b. These extraction process will be described later in detail. A writing pressure factor extraction section 2f similarly extracts a writing pressure at every sampling time.

The extracted certification factors are normalized by a normalizing section 2g. When the registration mode is selected, characteristic data extraction 3 is performed, and characteristic function parameters and standard data are registered in a handwriting registration section 4. When a certification mode is selected, a characteristics extraction section 5 extracts the normalized extracted factors, and the normalized extracted characteristics are compared with the standard data stored in the handwriting registration section 4 by a recognition section 5b so that a signature is judged whether or not the signature is a true signature. The characteristic data are handwriting characteristics for a person extracted from handwriting written by the person. The characteristic function parameters are keys for extracting the characteristic data. The standard data is previously registered characteristic data.

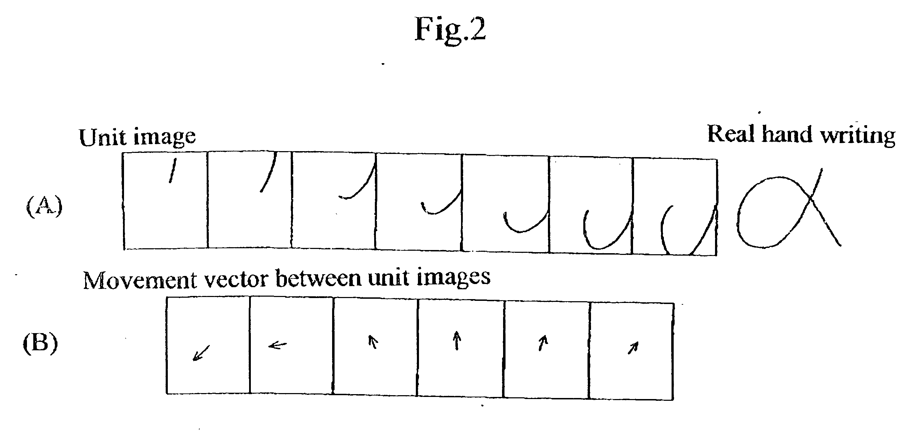

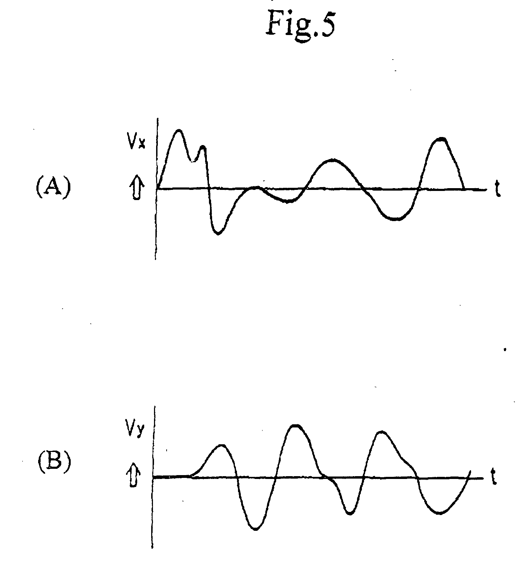

Extraction of the movement vector factor is performed by extracting handwriting vectors between continuously sampled unit images (to obtain the variation in movement of a leading edge of a writing device on a writing medium), as illustrated. in Figs. 2(A) and 2(B). When the variations of handwriting vectors are broken down to their X-coordinate components and their Y-coordinate components and are illustrated over time, an example of the variation of handwriting vectors is illustrated in Figs. 5(A) and 5(B).

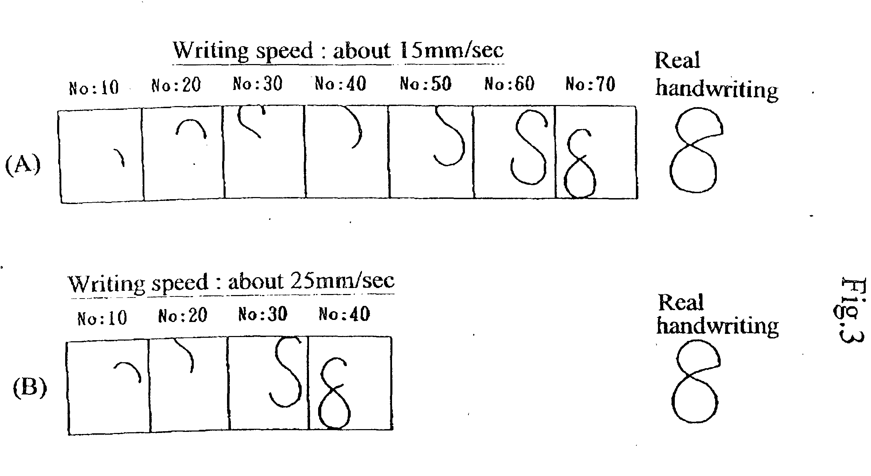

Extraction of the writing speed factor is illustrated in Figs. 3(A) and 3(B), for example. Even when the actually written handwritings are "8" and have the same shape as one another, the actually written handwritings are quite different from one another at signing times corresponding to No. 10 through No. 40. One handwriting is written at a writing speed of 15 m/sec. while the other handwriting is written at a writing speed of 25 m/sec. Therefore, a difference in a writing speed between two handwritings is extracted even when the two handwritings have the same shape. Further, when signing time periods of two handwritings are the same and when images at the signing time corresponding to No. 70, for example, are the same, images at the signing times each corresponding to No. 10, No. 20, ..., and No. 60 are different from one another under conditions that the intermediate writing speeds are different. For example, one handwriting has a slower speed at an initial stage of writing and has a faster speed at a final stage of writing, while the other handwriting has a faster speed at an initial stage of writing and has a slower speed at a final stage of writing. Therefore, a difference in a writing speed between two handwritings is also extracted.

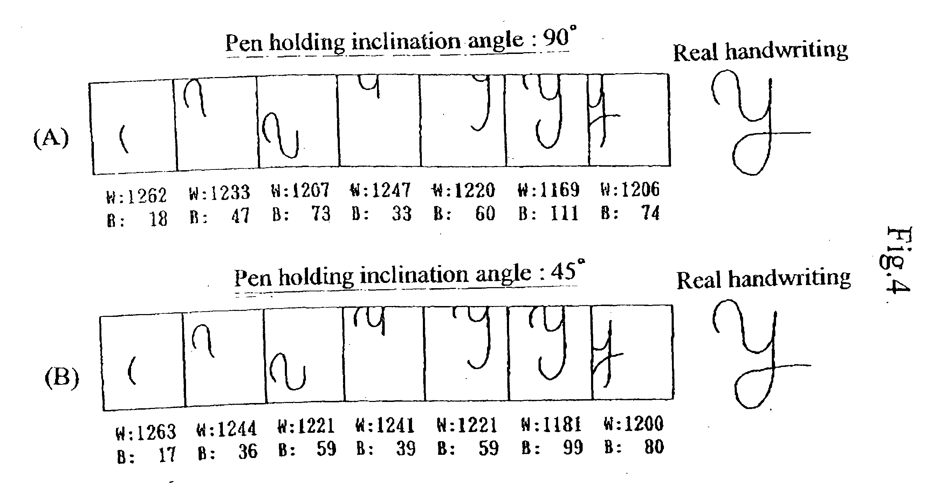

Extraction of black/white dots is performed as follows. Even when real handwritings are the same, sampled images are different from one another, one handwriting being written with a pen which is inclined with respect to a writing face, while the other handwriting is written with a pen which is vertical with respect to a writing face. When the real handwriting comprises black dots and when the pen is in a standing posture (vertical with respect to the writing face, for example), black dots are picked up as they are, while black dots are picked up in a longer condition (occasionally, black dots may be picked up in a shorter condition) when the pen is inclined with respect to the writing face. More specifically, even when the real handwritings are the letter "y" and have the same shape, distribution ratios of black/white dots are found to be quite different from one another by comparing distribution ratios of black/white dots at every sampling timing, one handwriting being written with a pen which is held at a holding angle of 90°, while the other handwriting is written with a pen which is held at a holding angle of 45°, as illustrated in Figs. 4(A) and 4(B). Therefore, a difference between two handwritings can be extracted by comparing distribution ratios of black/white dots at every sampling timing.

Further, even when real handwritings are the same, images sampled by an image sampling means such as a CCD camera or the like have different shapes from one another because the images are modulated (deformed) based upon the pen holding inclination angles. Therefore, a difference between pen holding inclination angles is extracted by comparing image shapes. Then, it can be judged whether the signatures are written by the correct person or by a forger based upon the coincidence or difference of pen holding inclination angles.

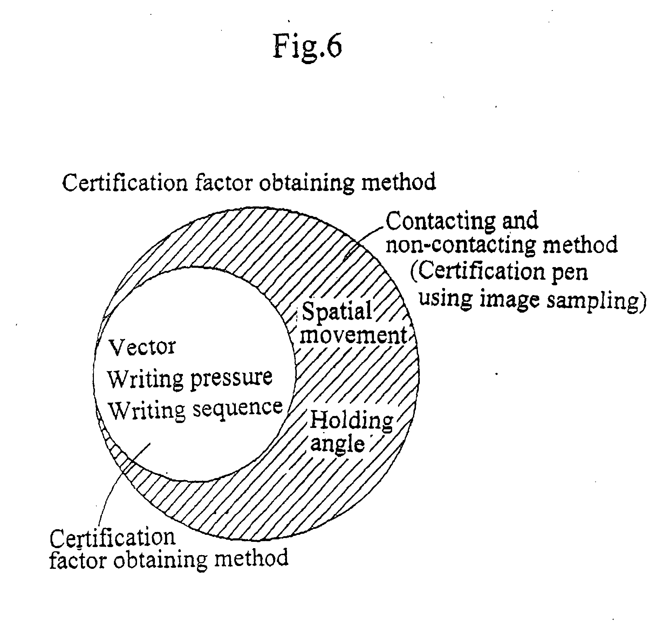

Fig. 6 is a diagram useful in understanding a certification factor obtaining formula of the apparatus for certifying handwriting.

It is illustrated in the diagram that a vector (a movement vector), writing pressure and writing sequence (the order of making strokes in writing a Chinese character) are factors obtained by a contact of a pen and a writing face, while a spatial movement including a vector and writing sequence and pen holding inclination angle are factors obtained by a sampled image.

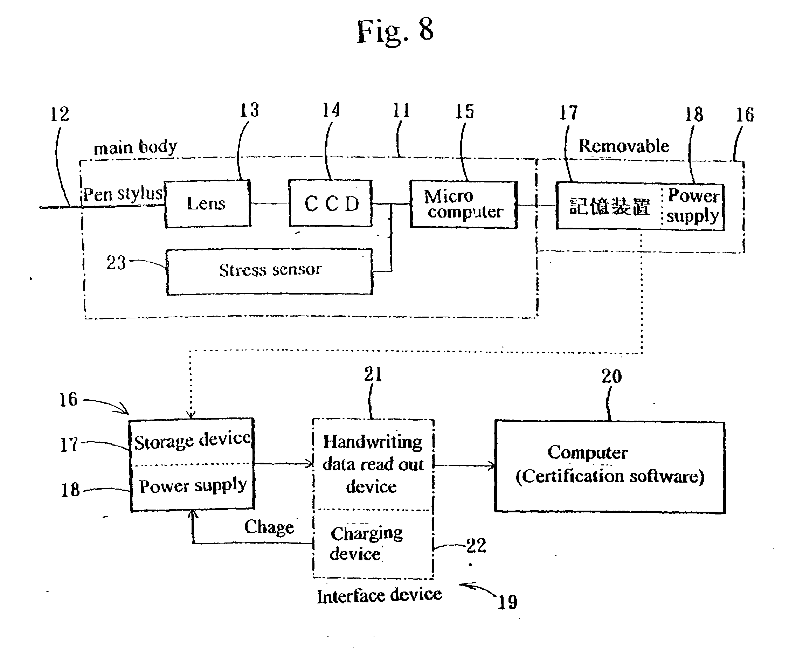

Fig. 8 is a block diagram of an apparatus for storing and reproducing handwriting which is used for sampling handwriting data for the apparatus for certifying handwriting.

The apparatus for storing and reproducing handwriting comprises a certification pen 11 for detecting and storing handwriting, an interface device 19, and a computer 20 for reading out handwriting data stored in the certification pen 11 through the interface device 19 and for reproducing and certifying the handwriting.

The certification pen 11 comprises a pen shaft 12 such as a ball point pen stylus for writing on paper and the like, a lens 13, a CCD 14, a microcomputer 15, a storage device 17, a power supply device (battery) 18 and a stress sensor 23 for detecting contact/non-contact of the pen shaft 12 and a paper, A unit 16 comprising the storage device 17 and the power supply device 18 is attached to a main body of the certification pen 11 in a detachable manner.

When the unit 16 is detached from the main body of the certification pen 11 and is connected to the interface device 19. Handwriting data stored in the storage device 17 is taken into the computer 20 through a reading out device 21 for reading out handwriting data. Further, a battery within the power supply device 18 is charged by a charging device 22.

The computer 20 includes software (program) therein, the software reproducing and certifying handwriting based upon sampled handwriting data.

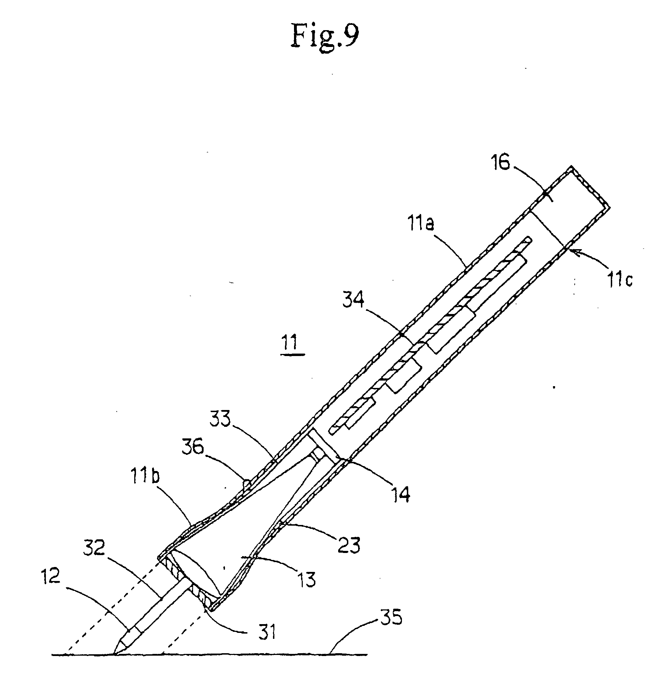

Fig. 9 is a cross sectional view of the certification pen 11.

The certification pen 11 has a case body 11a having a circular rod shape and a pencil shape. A leading edge section 11b of the case body 11a has a diameter enlarged to some degree. A pen shaft holding plate 31 having transmissivity to light is provided at the leading edge section 11b of the case body 11a. A pen shaft holder 32 for holding the pen shaft 12 projects from a central position of the pen shaft holding plate 31. A writing means comprises the pen shaft holding plate 31, the pen shaft 12 and the pen shaft holder 32.

A telecentric lens 13 as a telecentric lens system is disposed in an interior side with respect to the pen shaft holding plate 31. A CCD area sensor (image sampling means) 14 is disposed at an edge section in an interior side with respect to the telecentric lens 13 in a neighboring condition with respect to the telecentric lens 13. The telecentric lens 13 is illustrated in Fig. 9 to have an illustrated shape which schematically represents a light path. The shape does not represent a shape of the lens itself, however. Further, lenses other than the telecentric lens may be employed. In this embodiment, an optical axis of the telecentric lens 13 is coincident to a central axis of the pen shaft 12 and the pen shaft holder 31 (and a central axis of the case body 11). The CCD area sensor 14 is disposed on the optical axis. But, the optical axis of the telecentric lens 13 and a central axis of the writing means need not be coincident to one another. The optical axis and the central axis may be shifted to some degree from one another when a leading edge of the pen shaft 12 (that is, a point of handwriting at the writing timing which handwriting is being written) is located within an optical detection field of view and when the point of handwriting is detected.

As is apparent from Fig. 9, the pen shaft holding plate 31, the pen shaft 12, the pen shaft holder 32, the telecentric lens 13 and the CCD area sensor 14 are fixed to an inner case 33 in one body. The inner case 33 is slightly slidable along a direction which is parallel to the optical axis within the case body 11 due to writing pressure during a writing operation. When the inner case 33 slides along the optical axis and moves to the interior side of the case body 11 due to the writing pressure during the writing operation, the stress sensor 23 is pushed by the inner case 33 so that the writing process being carried out is detected. Further, the stress sensor 23 may detects a condition representing writing processing being carried out based upon bending of the inner case 33 in a direction (radial direction) which is vertical with respect to the optical axis, for example, because it is sufficient that the stress sensor 23 can detect a condition representing writing processing is being carried out.

Further, a printed circuit board 34 on which electric circuitry including LSI (large scale integration) and the like are mounted is disposed within the case body 11. The CCD area sensor 14 is electrically connected to the electric circuitry so that handwriting detection signals are taken thereinto. The unit 16 is provided at a rear section 11 c of the case body 11, the unit 16 including therein a storage device for storing handwriting detection information and a battery.

Furthermore, the sensor (stress sensor) 23 for detecting a writing process is provided between an inner wall of the case body 11 and the inner case 33. In this embodiment, the stress sensor 23 is pushed by the inner case 33 when the inner case 33 is slightly moved to an inner side of the case body 11 due to the writing pressure, and detects a writing process based upon the pressing force. A start switch 36 is provided at a portion of the case body 11 which is located at an outer side with respect to the stress sensor 23. A power supply of the certification pen is turned on/off by operating the start switch 36.

When the certification pen having the above arrangement is used, the power supply is turned on by pushing the start switch 36. Then, the case body 11 is held and is inclined (a normal writing condition) with respect to a paper face 35 as is illustrated in Fig. 9. Thereafter, characters, figures or the like are written. The inner case 33 slightly moves into the case body 11 due to writing pressure, so that the writing being carried out is detected by the stress sensor 23. A handwriting, that is an image on the paper face 35, is received by the telecentric lens 13 as parallel light beams which are parallel to the optical axis, and is converted into handwriting signals by the CCD area sensor 14. The handwriting signals are compressed, for example, such as thinning by the electric circuitry. The compressed data is sequentially stored in the storage device 17. The leading edge of the pen shaft 12 may move through space (i.e., apart from the paper face 35) during writing processing. Condition detection signals representing conditions are stored in the storage device 17 simultaneously to the storing of the handwriting detection signals (compressed data), one condition corresponding to the leading edge of the pen shaft 12 being moved through space while another condition corresponding to the leading edge of the pen shaft 12 being moved on the paper face 35. The condition detection signals are used to simplify the reproduction process when handwriting is to be reproduced using handwriting reproducing software (handwriting reproducing means) within the computer 20 which is illustrated in Fig. 8.

The handwriting storing process of the certification pen 11 is described. In the following description, an assumption is made that the alphabetical character "L" is written on a paper using the ball point pen stylus 12 of the certification pen. And, the CCD area sensor 14 samples images within a field of view sequentially at every constant sampling timing.

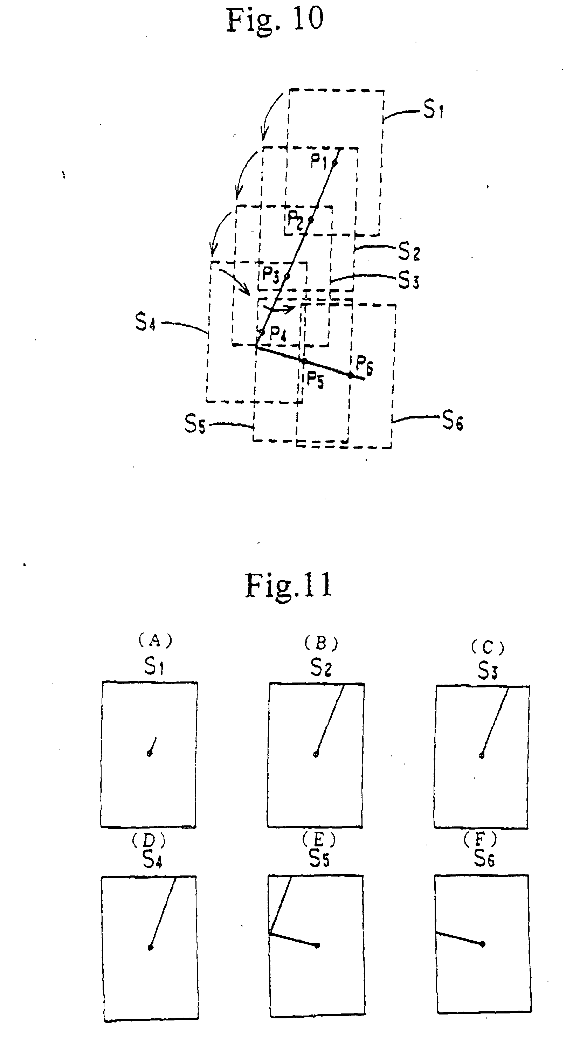

When the character "L" is written, a first line which has a gentle inclination from an upper position to a left-lower direction is first written, then a second line which has a gentle inclination from a left-lower position to a right-lower direction is written, as is illustrated in Fig. 10. When a location of the ball point pen stylus 12 moves from P1, P2, ..., P6, ... at every sampling time, a field of view of the CCD area sensor 14 moves from S1, S2, ..., S6, ... so that images S1, S2, ..., S6, ... having the same size are stored in the handwriting storage device 17 sequentially following time, as is illustrated in Fig. 11. An entire handwriting is stored by sequentially storing the partial images having the same size.

In the embodiment, a removable storage device is employed as an interface between the certification pen and the computer. However, the certification pen and the computer may be directly connected by a wire connection or by a wireless connection instead.

Further, in the embodiment, certification factors which are obtained by the stress sensor and the image sampling means are employed. But, certification processing of a signature may be performed based upon only certification factors from images obtained by the image sampling means.

## Claims

1. An apparatus for certifying handwriting, comprising:
a certification pen (11), comprising
writing means (12) for recording manual handwriting on an object for recording;
image sampling means (1a)(14) for sampling a two-dimensional image on a surface (35) of the object, which image corresponds to the handwriting which is within an extent with respect to a leading edge of the writing means (12) such that a sequence of partial images (S1,..,S6) of the handwriting is sampled ; the apparatus further comprising :
certification feature extracting means (2) for extracting a plurality of certification features from handwriting data which is obtained by the image sampling means (1a)(14);
recording and storing means (4) for recording and storing the plurality of extracted certification features; and
verification means (5) for verifying the handwriting by comparing the plurality of extracted certification features and a plurality of previously recorded certification features.

2. Apparatus according to claim 1, **characterized by**
pressure detection means (23) for detecting a pressure due to handwriting using the writing means (12), wherein
the certification feature extracting means (2) extracts the plurality of certification features from handwriting data which is obtained by the pressure detection means (23) and the image sampling means (1a)(14).

3. Apparatus as set forth in claim 1 or 2, wherein the pluralitiy of certification
features include handwriting vector information, writing speed information, distribution ratio information of black/white dots, and pen holding inclination angle information based on the distribution ratio of the black/white dots.

## Patentansprüche

1. Gerät zur Handschriftbeglaubigung mit:
einer Beglaubigungsfeder (11), mit
einem Schreibmittel (12) zum Aufzeichnen manueller Handschrift auf einem Objekt zum Aufzeichnen;
einem Bildabtastmittel (1a) (14) zum Abtasten eines zweidimensionalen Bildes auf einer Oberfläche (35) auf dem Objekt, wobei das Bild der Handschrift entspricht, die innerhalb eines Bereiches in Bezug auf eine führende Kante des Schreibmittels (12) ist, so daß eine Abfolge von Teilbildern (S1, ..., S6) der Handschrift abgetastet wird;
wobei das Gerät weiter aufweist:
ein Beglaubigungsmerkmalsextrahierungsmittel (2) zum Extrahieren einer Mehrzahl von Beglaubigungsmerkmalen von Handschriftdaten, die durch das Bildabtastmittel (1a) (14) erhalten sind;
ein Aufzeichnungs- und Speichermittel (4) zum Aufzeichnen und Speichern einer Mehrzahl von extrahierten Beglaubigungsmerkmalen; und
einem Bestätigungsmittel (5) zum Bestätigen der Handschrift durch Vergleichen der Mehrzahl von extrahierten Beglaubigungsmerkmalen und einer Mehrzahl von zuvor aufgezeichneten Beglaubigungsmerkmalen.

2. Gerät nach Anspruch 1, **gekennzeichnet durch**
ein Druckerfassungsmittel (23) zum Erfassen eines Druckes aufgrund der Handschrift unter Benutzung des Schreibmittels (12),
worin das Beglaubigungsmerkmalsextrahierungsmittel (2) die Mehrzahl von Beglaubigungsmerkmalen aus Handschriftdaten extrahiert, die **durch** das Druckerfassungsmittel (23) und das Bildabtastmittel (1a) (14) erhalten sind.

3. Gerät nach Anspruch 1 oder 2, bei dem die Mehrzahl von Beglaubigungsmerkmalen Handschriftvektorinformation, Schreibgeschwindigkeitsinformation, Verteilungsverhältnisinformation von schwarzen/weißen Punkten und Federhalteneigungswinkelinformation auf der Grundlage des Verteilungsverhältnisses der schwarzen/weißen Punkte enthalten.

## Revendications

1. Un appareil pour certifier l'écriture manuscrite comprenant :
un stylo de certification (11) comprenant
des moyens d'écriture (12) pour enregistrer l'écriture manuscrite manuelle sur un objet pour enregistrer ; des moyens d'échantillonnage d'images (1a)(14) pour échantillonner une image bi-dimensionnelle sur une surface (35) de l'objet, ladite image correspondant à l'écriture manuscrite qui se trouve dedans par rapport à un bord d'attaque des moyens d'écriture (12) de telle sorte qu'une séquence d'images partielles (54, ..., 56) de l'écriture manuscrite est échantillonnée ; l'appareil comprenant également :
des moyens d'extraction de fonctions de certification (2) pour extraire une pluralité de fonctions de certification à partir des données d'écriture manuscrite qui sont obtenues par les moyens d'échantillonnage d'images (1a)(14) ;
des moyens d'enregistrement et de stockage (4) pour enregistrer et stocker la pluralité des fonctions de certification extraites ; et
des moyens de vérification (5) pour vérifier l'écriture manuscrite en comparant la pluralité de fonctions de certification extraites et unc pluralité de fonctions de certification précédemment enregistrées.

2. Appareil selon la revendication 1, **caractérisé par**
des moyens de détection de la pression (23) pour détecter unc pression due à l'écriture manuscrite utilisant les moyens d'écriture (12), dans lequel
les moyens d'extraction des fonctions de certification (2) extraient la pluralité de fonctions de certification des données d'écriture manuscrite qui sont obtenues par les moyens de détection de pression (23) et les moyens d'échantillonnage des images (1a)(14).

3. Appareil selon la revendication 1 ou 2, **caractérisé en ce que** la pluralité de fonctions de certification incluent des informations sur le vecteur d'écriture manuscrite, des informations sur la vitesse d'écriture, des informations sur le rapport de distribution des points noirs/blancs et des informations sur l'angle d'inclinaison de la tenue du stylo sur la base du rapport de distribution des points noirs/blancs.
